# EUROPEAN PATENT APPLICATION

(11) **EP 3 527 317 A1**
(43) Date of publication of application: **21.08.2019**
(21) Application number: 19156479.8
(22) Date of filing: 11.02.2019
(51) Int. Cl.: B23K 9/10, H02J 7/00

(54) **HYBRID MULTI-TOOL ENGINE WELDING SYSTEMS**

(30) Priority: 09.02.2018 US 201815892938
(71) Applicant: Lincoln Global, Inc., Santa Fe Springs, CA 90670 (US)
(72) Inventor: ENYEDY, Edward A., Eastlake, OH Ohio 44095 (US); HRUSKA, Adam M., Chardon, OH Ohio 44024 (US)
(74) Representative: Grosse Schumacher Knauer von Hirschhausen

(57) **Abstract**

Embodiments of hybrid engine welding systems are disclosed. One embodiment includes an engine, a generator, and a first disconnect device to mechanically couple/decouple the engine to/from the generator. A compressor produces a compressed air flow and/or a pump produces a hydraulic pressure. A second disconnect device mechanically couples/decouples the generator to/from the compressor and/or the pump. Electronics operatively connects the generator to a battery. The battery and the electronics power the generator as a motor at variable speeds when the generator is decoupled from the engine and coupled to the compressor or the pump, allowing selectable varying of a magnitude of the compressed air flow and/or the hydraulic pressure.

## Description

### FIELD

Embodiments of the present invention relate to systems, apparatus, and methods related to hybrid multi-tool engine welding systems and more specifically to a hybrid engine welding system.

### BACKGROUND

Traditional welding-type apparatus can be broken into two basic categories. The first category receives operational power from transmission power receptacles, also known as static power. The second is portable or self-sufficient, stand-alone welders having internal combustion engines, also known as rotating power. Frequently, welding is required where supply power may not be readily available. While in many settings conventional static power driven welders are preferred, engine driven welders enable welding-type processes where static power is not available. Rotating power driven welders operate by utilizing power generated from engine operation. As such, the welding power supply may be an engine driven welding power supply incorporating a generator. The generator may supply power to the welder as well as to other power tools as may be needed on site. Different applications require different versions of welders and power tools. As such, engine driven welders and welding-type apparatus allow portability and thus fill an important need. Hybrid engine-driven welders-generators have previously been widely discussed in the field. For example, a hybrid battery in a hybrid engine-driven welder-generator may be used as a source of auxiliary power. However, such hybrid engine-driven welders-generators have been limited with respect to how power from the generator and the battery may be distributed and employed.

### SUMMARY

In one embodiment, a hybrid engine welding system is provided. The hybrid engine welding system includes an engine and a generator. A first disconnect device is configured to mechanically couple/decouple the engine to/from the generator. The system further includes at least one of a compressor (configured to produce a compressed air flow) or a pump (configured to produce a hydraulic pressure). At least one second disconnect device is configured to mechanically couple/decouple the generator to/from at least one of the compressor or the pump. The system includes a battery, and electronics operatively connected to the generator and the battery. The battery and the electronics are configured to power the generator as a motor at variable speeds when the generator is decoupled from the engine and coupled to at least one of the compressor or the pump. Such a configuration allows selectable varying of a magnitude of at least one of the compressed air flow or the hydraulic pressure. In one embodiment, the generator and the electronics are configured to generate at least one of 50 Hz auxiliary power or 60 Hz auxiliary power when the generator is coupled to and mechanically driven by the engine. In one embodiment, the battery and the electronics are configured to generate at least one of 50 Hz auxiliary power or 60 Hz auxiliary power. In one embodiment, the generator and the electronics are configured to produce at least one of weld power for a welding operation and charging power to recharge the battery when the generator is coupled to and mechanically driven by the engine. In one embodiment, the generator is configured to, when coupled to and mechanically driven by the engine and when coupled to at least one of the compressor or the pump, mechanically drive at least one of the compressor or the pump to vary the magnitude of at least one of the compressed air flow or the hydraulic pressure. In one embodiment, the electronics includes at least one of an inverter circuit to convert DC power to AC power, a rectifier circuit to convert AC power to DC power, or a DC regulator circuit to regulate DC power. In one embodiment, at least one of the first disconnect device and the second disconnect device is a clutch. In one embodiment, the system includes a user interface controller configured to allow a user to remotely provide commands to the electronics to vary the magnitude of at least one of the compressed air flow or the hydraulic pressure. In one embodiment, the battery and the electronics are configured to produce weld power for a welding operation.

In one embodiment, a hybrid engine welding system is provided. The hybrid engine welding system includes an engine and a permanent magnet generator subsystem having a permanent magnet generator. The permanent magnet generator subsystem is configured to provide weld power for welding when the permanent magnet generator is mechanically coupled to and mechanically driven by the engine. A first disconnect device is configured to mechanically couple/decouple the engine to/from the permanent magnet generator. A synchronous generator is mechanically coupled to the permanent magnet generator and configured to produce auxiliary power to power at least one auxiliary tool. At least one of a compressor (configured to produce a compressed air flow) or a pump (configured to produce a hydraulic pressure) is provided. At least one second disconnect device is configured to mechanically couple/decouple the synchronous generator to/from at least one of the compressor or the pump. The permanent magnet generator is configured to mechanically drive the synchronous generator when the permanent magnet generator is mechanically coupled to and mechanically driven by the engine. The synchronous generator, when driven, produces the auxiliary power to power the at least one auxiliary tool. The synchronous generator, when driven, also mechanically drives at least one of the compressor or the pump to provide at least one of the compressed air flow or the hydraulic pressure when the synchronous generator is mechanically coupled to at least one of the compressor or the pump. One embodiment includes a battery, and electronics operatively connected to the battery and the permanent magnet generator subsystem. The battery and the electronics are configured to power the permanent magnet generator as a motor at variable speeds when the permanent magnet generator is decoupled from the engine and coupled to at least one of the compressor or the pump via the synchronous generator and the at least one second disconnect device. This allows selectable varying of a magnitude of at least one of the compressed air flow or the hydraulic pressure. In one embodiment, the battery and the electronics are configured to power the permanent magnet generator as a motor (when the permanent magnet generator is decoupled from the engine) to mechanically drive the synchronous generator to produce the auxiliary power to power the at least one auxiliary tool. In one embodiment, the battery and the electronics are configured to produce a weld power for a welding operation when the permanent magnet generator is decoupled from the engine. In one embodiment, the permanent magnet generator is configured to produce a charging power to recharge the battery via the electronics (when the permanent magnet generator is coupled to and mechanically driven by the engine). In one embodiment, the electronics includes at least one of an inverter circuit to convert DC power to AC power, a rectifier circuit to convert AC power to DC power, or a DC regulator circuit to regulate DC power.

In one embodiment, a hybrid engine welding system is provided. The hybrid engine welding system includes an engine configured to generate a first mechanical power and a battery configured to generate a first electrical power. At least one of a compressor (configured to produce a compressed air flow) or a pump (configured to produce a hydraulic pressure) is provided. A generator is mechanically coupled between the engine and at least one of the compressor or the pump. During a boost mode, the generator is configured to transfer the first mechanical power to at least one of the compressor or the pump to mechanically drive at least one of the compressor or the pump. Electronics is operatively connected to the generator and the battery. During the boost mode, the electronics is configured to distribute the first electrical power to the generator, where the generator is configured to convert the first electrical power to a boost mechanical power. The generator is also configured to transfer the boost mechanical power, along with the first mechanical power, to at least one of the compressor or the pump to mechanically drive at least one of the compressor or the pump. In one embodiment, the generator is a permanent magnet generator. In one embodiment, the electronics includes at least one of an inverter circuit, a rectifier circuit, and a chopper circuit. In one embodiment, during a mixed mode, the generator is configured to transfer a first portion of the mechanical power to at least one of the compressor or the pump to mechanically drive at least one of the compressor or the pump. Also, during the mixed mode, the generator is configured to convert a second portion of the mechanical power to a second electrical power. Furthermore, during the mixed mode, the electronics is configured to convert a first portion of the first electrical power and the second electrical power to a weld power for a welding operation. Also, during the mixed mode, the electronics is configured to convert a second portion of the first electrical power and the second electrical power to auxiliary power to power at least one auxiliary tool. In one embodiment, the auxiliary power is at least one of 50 Hz auxiliary power or 60 Hz auxiliary power.

### BRIEF DESCRIPTION OF THE DRAWINGS

The accompanying drawings, which are incorporated in and constitute a part of the specification, illustrate various embodiments of the disclosure. It will be appreciated that the illustrated element boundaries (e.g., boxes, groups of boxes, or other shapes) in the figures represent one embodiment of boundaries. In some embodiments, one element may be designed as multiple elements or that multiple elements may be designed as one element. In some embodiments, an element shown as an internal component of another element may be implemented as an external component and vice versa. Furthermore, elements may not be drawn to scale.
FIG. 1 illustrates a system block diagram of one embodiment of a hybrid engine welding system in a battery charging mode;
FIG. 2 illustrates a system block diagram of one embodiment of a hybrid engine welding system in a hybrid battery mode;
FIG. 3 illustrates a system block diagram of one embodiment of a hybrid engine welding system in a mixed mode or a boost mode;
FIG. 4 illustrates a system block diagram of one embodiment of an alternative hybrid engine welding system having a permanent magnet generator and a synchronous generator;
FIG. 5 illustrates an apparatus block diagram of one embodiment of electronics employed in the systems of FIGS. 1-4;
FIG. 6 illustrates an apparatus block diagram of one embodiment of a user interface controller used in conjunction with the systems of FIGS. 1-4; and
FIG. 7 illustrates an apparatus block diagram of one embodiment of a controller configuration that may be used as a controller in the electronics of FIG. 5 or as the user interface controller of FIG. 6.

### DETAILED DESCRIPTION

Embodiments of the present invention provide a hybrid engine welding system that is configured to provide compressed air flow and/or hydraulic pressure while operating from a battery. A hybrid engine welding system may employ an engine, a generator, a battery, and a compressor and/or a pump. The engine may be an internal combustion engine running on gasoline, propane, natural gas, or diesel fuel, for example. The compressor may provide compressed air flow to support compressed air applications and the pump may provide hydraulic pressure to support hydraulic fluid applications. The compressor and/or the pump may be connected to the generator via a clutch or other mechanical disconnect device. When the engine is off, the battery may provide energy to the generator, allowing the generator to work as a motor to spin the compressor and/or the pump. A clutch or other mechanical disconnect device separates the generator from the engine such that the engine does not spin while operating in the hybrid mode. In one embodiment, the generator can spin at a variable speed to provide the compressed air flow and/or the hydraulic pressure as desired. The operating rate (speed) can be set by a user via a user interface or by remote sensors. For example, the hybrid engine welding system may be located on a service truck with an air reservoir tank that has a pressure sensor that provides feedback to the system. Embodiments may provide zero emissions and low noise while operating in the hybrid (battery-only) mode, which may be useful when working in an enclosed building or near a low noise location such as a school or a hospital. As an example, an operator can operate the hybrid engine welding system with the engine to charge the battery while traveling from job site to job site, and then shut the engine off and run only the battery for certain applications on a job site.

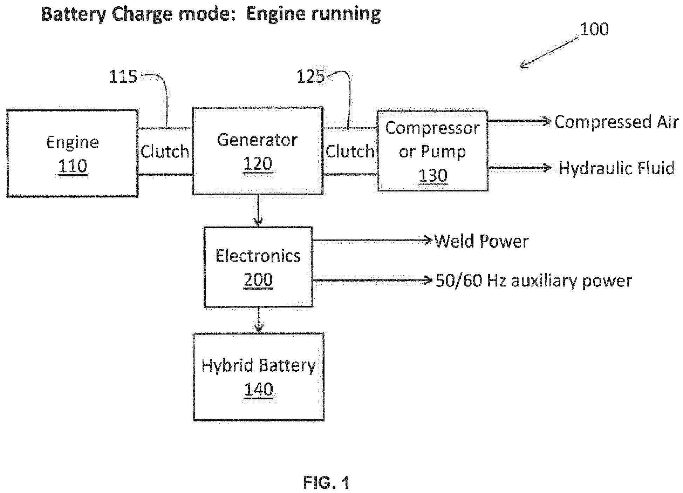

Referring now to the drawings, which are for the purpose of illustrating exemplary embodiments of the present invention only and not for the purpose of limiting same, FIG. 1 illustrates a system block diagram of one embodiment of a hybrid engine welding system 100 in a battery charging mode. The system 100 includes an engine 110 (e.g., an internal combustion engine running on gasoline, propane, natural gas, or diesel fuel), a generator 120 (e.g., a permanent magnet generator or a generator having stacked steel laminations and copper windings), a compressor and/or pump 130 (to provide a compressed air flow and/or a hydraulic pressure, respectively), a hybrid battery 140, and electronics 200. The system also includes a first disconnect device 115 (e.g., a clutch) to mechanically couple/decouple the engine 110 to/from the generator 120. The system further includes a second disconnect device 125 (e.g., a clutch) to mechanically couple/decouple the generator 120 to/from the compressor/pump 130.

Various embodiments may include just a compressor, just a pump, or a compressor and a pump. The compressor may be used for needle scalers, impact wrenches, sand blasting, inflation of tires, or air grinders, for example, in a welding environment. The pump may be used for operating a small crane, raising and lowering wheels on a rail-truck, positioning outriggers of a large service truck, or rail grinding equipment, for example, in a welding environment.

In FIG. 1, the electronics 200 is operatively connected to the generator 120 and the hybrid battery 140. In the battery charging mode, the engine 110 is coupled to the generator 120 via the first disconnect device 115 and mechanically drives the generator 120 to produce electricity. At least a portion, if not all, of the electricity produced by the generator is converted by the electronics 200 to charge the battery 140. However, some of the electricity produced by the generator 120 may be used to generate weld power for a welding operation and/or auxiliary power (e.g., 50 Hz and/or 60 Hz auxiliary power) for powering auxiliary tools (e.g., grinders, lights, drills, saws, and cutters).

Furthermore, the generator 120 may mechanically drive the compressor and/or pump 130, to produce compressed air flow and/or hydraulic pressure, when the generator 120 is coupled to the compressor and/or pump 130 via the second disconnect device 125. In one embodiment, the magnitude of the compressed air flow and/or the hydraulic pressure may be varied by varying the spinning of the compressor and/or pump 130, either manually or under the control of the electronics 200. For example, in one embodiment, the second disconnect device 125 is a geared device having gearing that can be varied to change the amount of spinning of the compressor and/or pump 130 even though the generator is being driven at a constant rate. In another embodiment, the engine can be run at different speeds to result in varying the magnitude of the compressed air flow and/or the hydraulic pressure.

In this manner, in the battery charging mode, the hybrid battery 140 may be recharged at faster rates or slower rates. The rate of charging depends on how much of the power generated by the engine 110 is being converted and transferred to the battery 140 as electrical energy, and how much is being converted to electrical energy and/or mechanical energy to drive the compressor and/or pump 10, generate weld power, or generate auxiliary power.

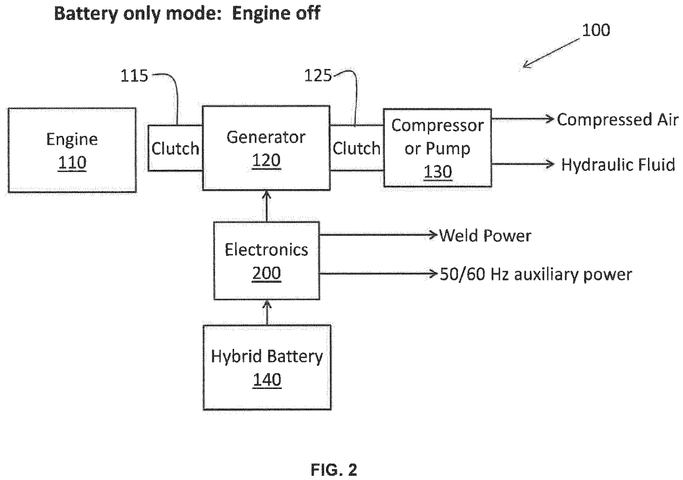

FIG. 2 illustrates a system block diagram of one embodiment of a hybrid engine welding system 100 in a hybrid battery mode. The system 100 in FIG. 2 is the same as the system 100 in FIG. 1. However, in FIG. 2, the first disconnect device 115 is not coupling the engine 110 to the generator 120 (i.e., the engine 110 and the generator 120 are decoupled) in the hybrid battery mode. In the hybrid battery mode, the battery 140 and the electronics 200 are configured to power the generator 120 as a motor at variable speeds. When the generator 120 is decoupled from the engine 110 and coupled (via the second disconnect device) to the compressor and/or pump 130, the battery 140 and the electronics 200 can power the generator 120 as a motor to allow selectable varying of a magnitude of the compressed air flow and/or the hydraulic pressure produced by the compressor and/or pump 130. Furthermore, the battery 140 and the electronics 200 may be used to generate weld power and/or auxiliary power in the hybrid battery mode. The amount of weld power, the amount of auxiliary power, and the rate of spinning of the compressor and/or pump 130 by the generator 120 is under the control of the electronics, in accordance with one embodiment.

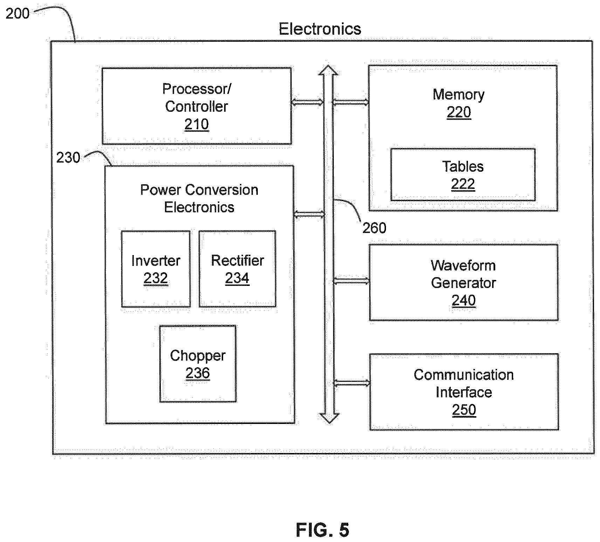

In one embodiment, the electronics 200 includes an inverter circuit to convert DC electrical power from the battery 140 to AC electrical power, for example, to drive the generator 120 as a motor. In one embodiment, the electronics 200 includes a DC regulation circuit (e.g., a chopper circuit) to convert DC electrical power from the battery 140 to, for example, regulated weld power. In one embodiment, the electronics 200 includes a rectifier circuit to convert AC electrical power from the generator to DC electrical power, for example, to charge the battery 140 when the engine 110 is driving the generator 120. Transformers, resistors, capacitors, switches, and other electrical components may be used in conjunction with the inverter circuit, the chopper circuit, and the rectifier circuit in accordance with standard electrical design practice. Certain details of one embodiment of the electronics 200 are discussed later herein with respect to FIG. 5.

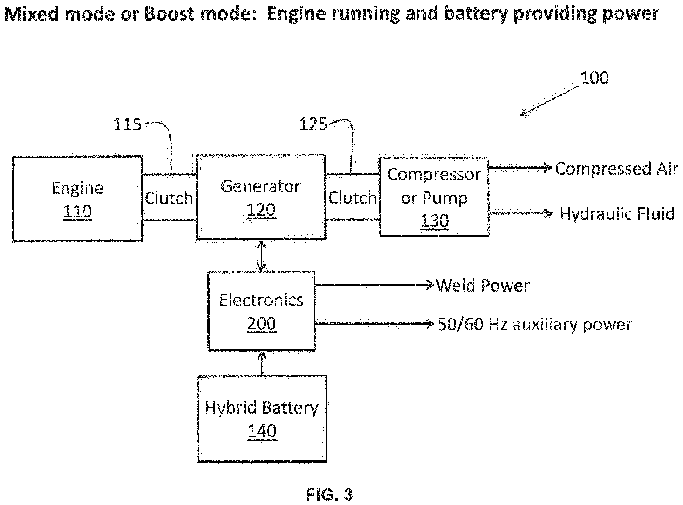

FIG. 3 illustrates a system block diagram of one embodiment of a hybrid engine welding system 100 in a mixed mode or a boost mode. The system 100 in FIG. 3 is the same as the system 100 in FIG. 1 and FIG. 2. However, in FIG. 3, both the engine 110 and the hybrid battery 140 are used to produce energy that can be used in a boost mode or a mixed mode. The engine 110 generates a first mechanical power and the battery 140 generates a first electrical power.

During the boost mode, the generator 120 transfers the first mechanical power to the compressor and/or pump 130 to mechanically drive the compressor and/or pump 130. Also, during the boost mode, the electronics 200 distributes the first electrical power from the battery 140 to the generator 120. The generator 120 converts the first electrical power to a boost mechanical power and transfers the boost mechanical power, along with the first mechanical power, to the compressor and/or pump 130 to mechanically drive the compressor and/or pump 130.

Of course, in reality, there are likely some losses in the system 100 such that not quite all of the first mechanical power and not quite all of the first electrical power gets transferred to the compressor and/or pump 130. However, all the power that can be transferred is transferred to the compressor and/or pump 130 during the boost mode, in accordance with one embodiment. In this manner, power provided by the engine 110 is boosted by power provided by the battery 140 to drive the compressor and/or pump 130 with more power than can be provided by the engine 110 alone.

During the mixed mode, the generator 120 transfers a first portion of the first mechanical power generated by the engine 110 to the compressor and/or pump 130 to drive the compressor and/or pump 130. The generator 120 converts a second portion of the first mechanical power generated by the engine 110 to a second electrical power. The electronics 200 converts a first portion of the first electrical power from the battery 140 and the second electrical power from the generator 120 to weld power for a welding operation. Furthermore, the electronics 200 converts a second portion of the first electrical power from the battery 140 and the second electrical power from the generator 120 to auxiliary power (e.g., 50 Hz auxiliary power or 60 Hz auxiliary power) to power auxiliary tools. In this manner, power from both the engine 110 and the battery 140 is distributed to drive the compressor and/or pump, produce weld power, and produce auxiliary power.

In one embodiment, the electronics 200 controls the exact nature of the mixed mode. That is, the power from both the engine 110 and the battery 140 can be distributed throughout the system 100 in various ways under the control of the electronics 200. For example, the total power from the engine 110 and the battery 140 can be distributed throughout the system to produce the compressed air flow and/or the hydraulic pressure, the weld power, and the auxiliary power in various proportions. Alternatively, the total power from the engine 110 and the battery 140 can be distributed to produce just one or two of the compressed air flow and/or the hydraulic pressure, the weld power, and the auxiliary power in various proportions. Details of how the electronics may be configured to act as a controller are described later herein with respect to at least FIGS. 5-7.

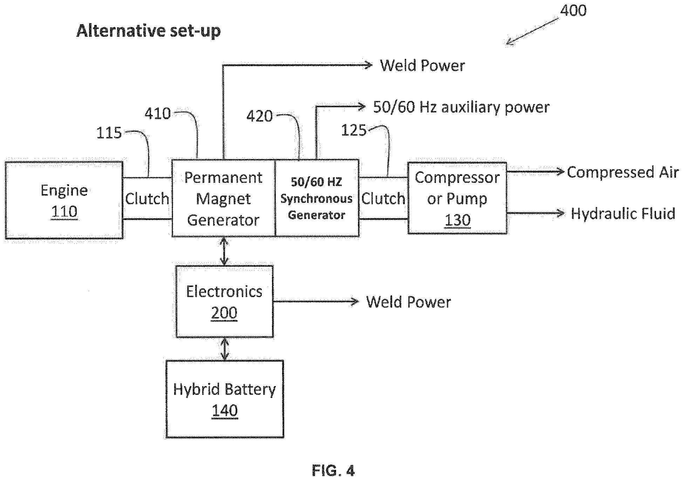

FIG. 4 illustrates a system block diagram of one embodiment of an alternative hybrid engine welding system 400 having a permanent magnet generator 410 and a synchronous generator 420. The system 400 in FIG. 4 is similar to the system 100 in FIGS. 1-3, except that the generator 120 is replaced with the permanent magnet generator 410 and the synchronous generator 420. The permanent magnet generator 410 is mechanically coupled to the synchronous generator 420 via, for example, a geared mechanical coupling to allow variable driving of the synchronous generator 420 and, therefore, variable driving of the compressor and/or pump 130. Alternatively, in another embodiment, the second disconnect device 125 is a geared device having gearing that can be varied to change the amount of spinning of the compressor and/or pump 130 even though the synchronous generator 420 is being driven at a constant rate. The various functions and modes of operation of the system 400 of FIG. 4 are selected and controlled by the electronics 200, in accordance with one embodiment.

For example, in some modes, the permanent magnet generator 410 helps provide weld power for welding when the permanent magnet generator 410 is mechanically coupled to and mechanically driven by the engine 110 via the first disconnect device 115. Permanent magnet generators typically run at a higher efficiency and a higher power density than generators made of, for example, stacked steel laminations and copper windings. The synchronous generator 420 produces auxiliary power (e.g., 50 Hz and/or 60 Hz auxiliary power) to power auxiliary tools, when mechanically driven by the permanent magnet generator 410, and may eliminate the need for an inverter circuit in the electronics 200.

In one embodiment, the permanent magnet generator 410 is configured as a subsystem having a permanent magnet generator and, for example, a rectifier circuit and a DC regulation circuit (e.g., having electronics similar to the electronics 200) to form the weld power from AC power from the permanent magnet generator 410. In another embodiment, the rectifier circuit and the DC regulation circuit are part of the electronics 200 such that the weld power is formed by the electronics 200, from AC power from the permanent magnet generator 410, and the weld power is output by the electronics 200. Furthermore, AC power from the permanent magnet generator 410 may be converted to DC power by the electronics 200 which is used to recharge the battery 140.

In other modes, when the engine 110 is decoupled from the permanent magnet generator 410, the battery 140 and the electronics 200 can power the permanent magnet generator 410 as a motor at variable speeds. The permanent magnet generator 410 mechanically drives the synchronous generator 420 which drives the compressor and/or pump 130 via the second disconnect device 125, allowing selectable varying of a magnitude of the compressed air flow and/or the hydraulic pressure. Furthermore, when the engine 110 is decoupled from the permanent magnet generator 410, the battery 140 and the electronics 200 can be used to power the permanent magnet generator 410 as a motor to mechanically drive the synchronous generator 420 to produce auxiliary power. Also, when the engine 110 is decoupled from the permanent magnet generator 410, the battery 140 and the electronics 200 can be used to produce weld power for a welding operation. Again, the various functions and modes of operation of the system 400 of FIG. 4 are selected and controlled by the electronics 200, in accordance with one embodiment.

FIG. 5 illustrates an apparatus block diagram of one embodiment of the electronics 200 employed in the systems of FIGS. 1-4. The electronics 200 includes the following elements: a processor/controller 210, a memory 220 which can be accessed by the processor controller 210, power conversion electronics 230, a waveform generator 240, and a communication interface 250. The elements are operatively connected to each other via at least one bus 260. The bus 260 provides communications and/or power transfer to the internal elements and to external elements (e.g., the generator 120 or 410 and the battery 140), in accordance with various embodiments. As described previously herein, the electronics 200 is operatively connected to the hybrid battery 140 and the generator 120 or 410.

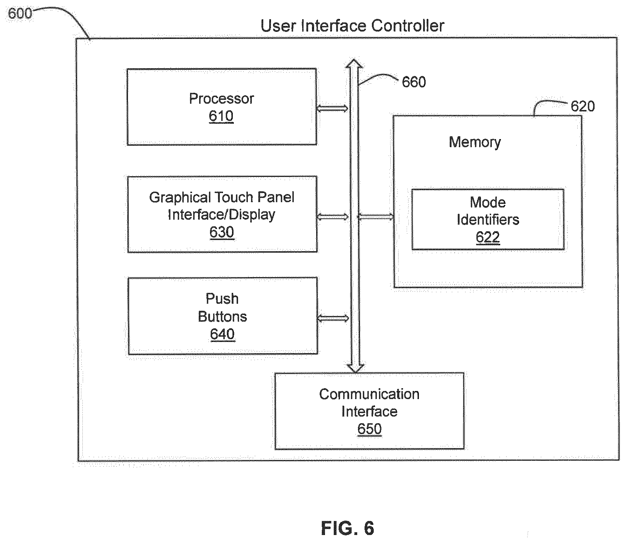

One or more of the engine 110, the first disconnect device 115, the generator 120 or 410, the synchronous generator 420, the second disconnect device 125, the compressor and/or pump 130, or the hybrid battery 140 may similarly be configured for data communications, in accordance with various embodiments. The communication interface 250 of the electronics 200 may be a wireless communication interface (e.g., via WiFi or Bluetooth®) and/or a wired communication interface (e.g., via copper cable or fiber optic). In accordance with some embodiments, the communication interface 250 is configured to communicate with, for example, one or more of the engine 110, the first disconnect device 115, the generator 120 or 410, the synchronous generator 420, the second disconnect device 125, the compressor and/or pump 130, the hybrid battery 140, and a remote user interface controller (described later herein with respect to FIG. 6). In this manner, the electronics 200 can receive commands or instructions from an external source (e.g., a remote user interface controller) and command the systems 100 and 400 (e.g., via the processor/controller 210 and the communication interface 250) to be reconfigured for the various modes of operation as described herein.

In one embodiment, the power conversion electronics 230 includes an inverter circuit 232, a rectifier circuit 234, and a chopper circuit 236 to perform the various corresponding functions as described herein. For example, the inverter circuit 232 is configured to convert DC power to AC power and the rectifier circuit 234 is configured to convert AC power to DC power. The chopper circuit 236 may be configured to act as a DC regulation circuit, in accordance with one embodiment. The power conversion electronics 230, together with the waveform generator 240, are configured to produce welding output power, in accordance with one embodiment.

In one embodiment, the processor/controller 210 acts as the "brain" of the systems 100 and 400. The processor/controller 210 is configured to access the memory 220 to access data from the memory 220 and write data to the memory 220. For example, in one embodiment, the memory 220 stores tables 222 of data defining modes of operation. The data from the tables 222 may be accessed from the memory 220 by the processor/controller 210 and processed into commands that are sent to one or more of the engine 110, the first disconnect device 115, the generator 120 or 410, the synchronous generator 420, the second disconnect device 125, the compressor and/or pump 130, and the hybrid battery 140.

In one embodiment, the processor/controller 210 receives responses from the various commanded elements of the system which verify that the commands have been received and executed. The processor/controller 210 also receives monitored parameters from the system. The responses and the monitored parameters may be written to the memory 220 by the processor/controller 210, in accordance with one embodiment. The processor/controller 210 is configured to adjust the data or the parameters defining a present mode of operation (and subsequently adjust the commands to the system) in real time in response to the responses, the monitored parameters, and/or new commands from an external user interface controller. In this manner, the processor/controller 210 acts as a real time controller to, for example, keep system functions balanced and within range as conditions change.

FIG. 6 illustrates an apparatus block diagram of one embodiment of a user interface controller 600 used in conjunction with the systems of FIGS. 1-4. In one embodiment, the user interface controller 600 is a remotely operated controller used by a human operator for selecting modes of operation and viewing parameters/conditions of the hybrid engine welding system. In this manner, an operator using a tool operatively connected to the hybrid engine welding system can be located away from the hybrid engine welding system but still control the system. The user interface controller 600 includes a processor 610 and a memory 620 which can be accessed by the processor 610. The user interface controller 600 also includes a graphical touch panel interface/display 630, push buttons 640, and a communication interface 650 to communicate with, for example, the electronics 200 of a hybrid engine welding system. The elements of the user interface controller 600 are operatively connected to each other via at least one bus 660. The bus 660 allows communication between and/or provides power to the various elements 610-650.

The graphical touch panel interface/display 630 and the push buttons 640 allow a human operator to select parameters (e.g., compressed air flow magnitude, hydraulic pressure magnitude), system modes of operation (e.g., hybrid battery mode, battery charging mode, boost mode, mixed mode), and possible sub-modes of each mode (e.g., a sub-mode that defines a specific distribution of engine power and battery power throughout the system in the mixed mode). The graphical touch panel interface/display 630 also displays information to the human operator such as, for example, menu options/icons, present configuration information, and parameter information received from the hybrid engine welding system via the communication interface 650. The communication interface 650 may be configured as a wired communication interface (e.g., via cable or fiber optic) and/or wireless communication interface (e.g., via WiFi or Bluetooth®), in accordance with various embodiments.

In accordance with one embodiment, the memory 620 stores mode identifiers 622 which can be selected by an operator, accessed by the processor 610, and sent via the communication interface 650 to the hybrid engine welding system. The mode identifiers 622 are used by the hybrid engine welding system to access the data from the tables 222 stored in the memory 220 of the electronics 200 which define the modes of operation.

In accordance with one embodiment, the user interface controller 600 is configured as a hand-held device. For example, in one embodiment, the user interface controller 600 is a smart phone capable of running one or more software applications that perform the functions of the user interface controller. In accordance with an alternative embodiment, the user interface controller 600 is integrated into the electronics 200 of the hybrid engine welding system. That is, the user interface controller 600 is no longer external to or remote from the hybrid engine welding system. In this manner, the hybrid engine welding system can be controlled by an operator locally, at the system, instead of remotely at a distance from the system.

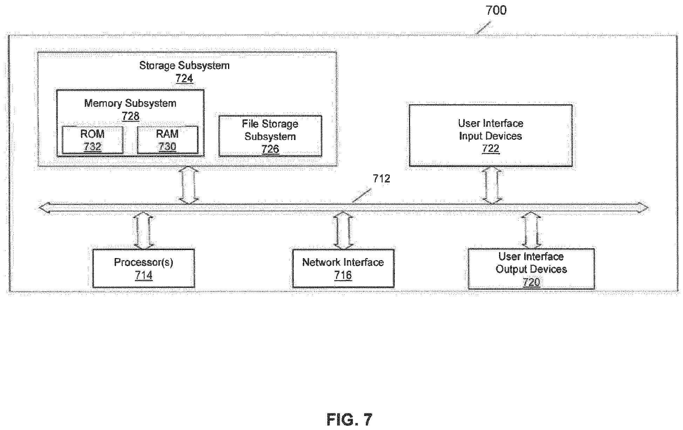

FIG. 7 illustrates an apparatus block diagram of one embodiment of a controller configuration 700 that may be used as a controller in the electronics of FIG. 5 or as the user interface controller of FIG. 6. The controller configuration 700 includes at least one processor 714 which communicates with a number of peripheral devices via bus subsystem 712. These peripheral devices may include a storage subsystem 724, including, for example, a memory subsystem 728 and a file storage subsystem 726, user interface input devices 722, user interface output devices 720, and a network interface subsystem 716. The input and output devices allow user interaction with the controller configuration 700. Network interface subsystem 716 provides an interface to outside networks and is coupled to corresponding interface devices in other computer systems. The other computer systems may share one or more characteristics with the controller configuration 700 and may include, for example, elements of a conventional computer, a digital signal processor, and/or other computing device.

User interface input devices 722 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller configuration 700 or onto a communication network.

User interface output devices 720 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller configuration 700 to the user or to another machine or computer system.

Storage subsystem 724 stores programming and data constructs that provide some or all of the controller functionality described herein. For example, when the controller configuration 700 is used as a user interface controller 600, the storage subsystem 724 may include one or more software modules including computer executable instructions for commanding modes of operation based on mode identifiers selected by the human operator stored in the storage subsystem 724.

These software modules are generally executed by processor 714 alone or in combination with other processors. Memory subsystem 728 used in the storage subsystem can include a number of memories including a main random access memory (RAM) 730 for storage of instructions and data during program execution and a read only memory (ROM) 732 in which fixed instructions are stored. A file storage subsystem 726 can provide persistent storage for program and data files, and may include a hard disk drive, a floppy disk drive along with associated removable media, a CD-ROM drive, an optical drive, or removable media cartridges. The modules implementing the functionality of certain embodiments may be stored by file storage subsystem 726 in the storage subsystem 724, or in other machines accessible by the processor(s) 714.

Bus subsystem 712 provides a mechanism for letting the various components and subsystems of the controller configuration 700 communicate with each other as intended. Although bus subsystem 712 is shown schematically as a single bus, alternative embodiments of the bus subsystem may use multiple buses.

The controller configuration 700 can be of various implementations including a single computer, a single workstation, a computing cluster, a server computer, or any other data processing system or computing device configured to perform the user interface/controlling functions described herein. Due to the ever-changing nature of computing devices and networks, the description of the controller configuration 700 depicted in FIG. 7 is intended only as a specific example for purposes of illustrating some embodiments. Many other configurations of the controller configuration are possible, having more or fewer components than the controller configuration 700 depicted in FIG. 7.

In accordance with some embodiments, any of the electronics 200 of FIG. 5 and the user interface controller 600 of FIG. 6 may share similar elements and configurations to that of the controller configuration 700 of Fig. 7. For example, the memory 220 of FIG. 5 or the memory 620 of FIG. 6 may be configured in a similar manner to the storage subsystem 724 of FIG. 7, in accordance with one embodiment.

While the disclosed embodiments have been illustrated and described in considerable detail, it is not the intention to restrict or in any way limit the scope of the claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the claims, which satisfy the statutory subject matter requirements of 35 U.S.C. §101. The above description of specific embodiments has been given by way of example. From the disclosure given, those skilled in the art will not only understand the general inventive concepts and attendant advantages, but will also find apparent various changes and modifications to the structures and methods disclosed. For example, alternative methods and/or systems with additional or alternative components may be utilized to configure a hybrid engine welding system to allow for hybrid, charging, boost, and mixed modes of operation. It is sought, therefore, to cover all such changes and modifications as fall within the spirit and scope of the general inventive concepts, as defined by the claims, and equivalents thereof.

**REFERENCE NUMERALS**

| | | | |
|---|---|---|---|
| 10 | pump | 420 | synchronous generator |
| 100 | hybrid engine welding system | 600 | user interface controller |
| | | 610 | processor |
| 110 | engine | 620 | memory |
| 115 | first disconnect device | 622 | mode identifiers |
| 120 | generator | 630 | graphical touch panel interface/display |
| 125 | second disconnect device | | |
| 130 | pump | 640 | buttons |
| 140 | hybrid battery | 650 | communication interface |
| 200 | electronics | 660 | bus |
| 210 | processoe/controller | 700 | controller configuration |
| 220 | memory | 712 | bus subsystem |
| 222 | tables | 714 | processor |
| 230 | power conversion electronics | 716 | network interface subsystem |
| 232 | inverter circuit | 722 | user interface input devices |
| 234 | rectifier circuit | 724 | storage subsystem |
| 236 | chopper circuit | 726 | file storage subsytem |
| 240 | waveform generator | 728 | memory subsystem |
| 250 | communication interface | 730 | main random access memory (RAM |
| 260 | bus | | |
| 400 | hybrid engine welding sysem | 732 | read only memory (ROM) |
| 410 | permanent magnet generator | | |

## Claims

1. A hybrid engine welding system (100) comprising:
an engine (110) and a generator (120);
a first disconnect device (115) configured to mechanically couple/decouple the engine (110) to/from the generator (120);
at least one of a compressor configured to produce a compressed air flow or a pump (10) configured to produce a hydraulic pressure;
at least one second disconnect device (125) configured to mechanically couple/decouple the generator (120) to/from at least one of the compressor or the pump (10);
a battery; and
electronics (200) operatively connected to the generator (120) and the battery,
wherein the battery and the electronics (200) are configured to power the generator (120) as a motor at variable speeds, when the generator (120) is decoupled from the engine (110) and coupled to at least one of the compressor or the pump (10), to allow selectable varying of a magnitude of at least one of the compressed air flow or the hydraulic pressure.

2. The hybrid engine welding system of claim 1, wherein the generator and the electronics are configured to generate at least one of 50 Hz auxiliary power or 60 Hz auxiliary power when the generator is coupled to and mechanically driven by the engine; and/or wherein the battery and the electronics are configured to generate at least one of 50 Hz auxiliary power or 60 Hz auxiliary power.

3. The hybrid engine welding system of claim 1 or 2, wherein the generator and the electronics are configured to produce at least one of weld power for a welding operation and charging power to recharge the battery when the generator is coupled to and mechanically driven by the engine.

4. The hybrid engine welding system of one of the claims 1 to 3, wherein the generator is configured to, when coupled to and mechanically driven by the engine and when coupled to at least one of the compressor or the pump, mechanically drive at least one of the compressor or the pump to vary the magnitude of at least one of the compressed air flow or the hydraulic pressure.

5. A hybrid engine welding system (400), in particular according to one of the preceding claims, comprising:
an engine (110);
a permanent magnet generator subsystem, including a permanent magnet generator (410), and configured to provide weld power for welding when the permanent magnet generator (410) is mechanically coupled to and mechanically driven by the engine (110);
a first disconnect device (115) configured to mechanically couple/decouple the engine to/from the permanent magnet generator (410);
a synchronous generator (420) mechanically coupled to the permanent magnet generator (410) and configured to produce auxiliary power to power at least one auxiliary tool;
at least one of a compressor configured to produce a compressed air flow or a pump (10) configured to produce a hydraulic pressure; and
at least one second disconnect device (125) configured to mechanically couple/decouple the synchronous generator (420) to/from at least one of the compressor or the pump (10),
wherein the permanent magnet generator (410) is configured to mechanically drive the synchronous generator (420), when the permanent magnet generator (410) is mechanically coupled to and mechanically driven by the engine (110), to cause the synchronous generator (420) to:
produce the auxiliary power to power the at least one auxiliary tool, and
mechanically drive at least one of the compressor or the pump (10) to provide at least one of the compressed air flow or the hydraulic pressure when the synchronous generator (420) is mechanically coupled to at least one of the compressor or the pump (10).

6. The hybrid engine welding system of claim 7, further comprising a battery and electronics operatively connected to the battery and the permanent magnet generator subsystem.

7. The hybrid engine welding system of claim 6, wherein the battery and the electronics are configured to power the permanent magnet generator as a motor at variable speeds, when the permanent magnet generator is decoupled from the engine and coupled to at least one of the compressor or the pump via the synchronous generator and the at least one second disconnect device, to allow selectable varying of a magnitude of at least one of the compressed air flow or the hydraulic pressure.

8. The hybrid engine welding system of claim 6, wherein the battery and the electronics are configured to power the permanent magnet generator as a motor, when the permanent magnet generator is decoupled from the engine, to mechanically drive the synchronous generator to produce the auxiliary power to power the at least one auxiliary tool.

9. The hybrid engine welding system of claim 6, wherein the battery and the electronics are configured to produce weld power for a welding operation when the permanent magnet generator is decoupled from the engine.

10. The hybrid engine welding system of claim 6, wherein the permanent magnet generator is configured to produce a charging power to recharge the battery via the electronics when the permanent magnet generator is mechanically coupled to and mechanically driven by the engine.

11. A hybrid engine welding system, in particular according to one of the preceding claims, comprising:
an engine (110) configured to generate a first mechanical power;
a battery configured to generate a first electrical power;
at least one of a compressor configured to produce a compressed air flow or a pump (10) configured to produce a hydraulic pressure;
a generator (120) mechanically coupled between the engine (110) and at least one of the compressor or the pump (10), wherein, during a boost mode, the generator (120) is configured to transfer the first mechanical power to at least one of the compressor or the pump (10) to mechanically drive at least one of the compressor or the pump (10); and
electronics (200) operatively connected to the generator (120) and the battery, wherein, during the boost mode, the electronics (200) is configured to distribute the first electrical power to the generator (120), wherein the generator (120) is configured to convert the first electrical power to a boost mechanical power and transfer the boost mechanical power, along with the first mechanical power, to at least one of the compressor or the pump (10) to mechanically drive at least one of the compressor or the pump (10).

12. The hybrid engine welding system of claim 11, wherein, during a mixed mode:
the generator (120) is configured to:
transfer a first portion of the first mechanical power to at least one of the compressor or the pump (10) to mechanically drive at least one of the compressor or the pump (10), and
convert a second portion of the first mechanical power to a second electrical power; and
the electronics (200) is configured to:
convert a first portion of the first electrical power and the second electrical power to weld power for a welding operation, and
convert a second portion of the first electrical power and the second electrical power to auxiliary power to power at least one auxiliary tool, wherein preferably the auxiliary power is at least one of 50 Hz auxiliary power or 60 Hz auxiliary power.

13. The hybrid engine welding system of one of the claims 1 to 12, wherein the electronics includes at least one of an inverter circuit to convert DC power to AC power, a rectifier circuit to convert AC power to DC power, or a DC regulator circuit to regulate DC power.

14. The hybrid engine welding system of one of the claims 1 to 13, wherein at least one of the first disconnect device and the second disconnect device is a clutch; and/or further comprising a user interface controller (630) configured to allow a user to remotely provide commands to the electronics to vary the magnitude of at least one of the compressed air flow or the hydraulic pressure; and/or wherein the battery and the electronics are configured to produce weld power for a welding operation.

15. The hybrid engine welding system of one of the claims 1 to 14, wherein the generator (120) is a permanent magnet generator; and/or wherein the electronics (200) includes at least one of an inverter circuit (232), a rectifier circuit (234), and a chopper circuit (236).
